# EUROPEAN PATENT SPECIFICATION

(11) **EP 2 666 242 B1**
(45) Date of publication and mention of the grant of the patent: **14.11.2018**
(21) Application number: 12702065.9
(22) Date of filing: 18.01.2012
(51) Int. Cl.: H04B 3/56, H02M 1/44, H02P 29/00, H01F 27/255, H02M 1/12, H04B 3/32, H04B 15/02

(54) **INTERCONNECTION FOR CONNECTING A SWITCHED MODE INVERTER TO A LOAD**
ZWISCHEN-VERKABELUNG ZUM VERBINDEN EINES SCHALTENDEN UMRICHTERS MIT EINER LAST
INTERCONNEXION PERMETTANT DE RACCORDER À UNE CHARGE UN INVERSEUR À DÉCOUPAGE

(30) Priority: 21.01.2011 GB 201101066
(43) Date of publication of application: 27.11.2013
(73) Proprietor: E2V Technologies (UK) Limited, Chelmsford Essex CM1 2QU (GB)
(72) Inventor: RICHARDSON, Robert, Chelmsford CM3 5PQ (GB)
(74) Representative: HGF Limited
(86) International application number: PCT/GB2012/050102
(87) International publication number: WO 2012/098394

(56) References cited:
- US-A1- 2004 173 368
- US-A1- 2006 021 786
- US-A1- 2006 021 787
- US-A1- 2006 181 459
- US-A1- 2008 143 285

## Description

This invention relates to an interconnection for connecting a switched mode inverter to a load and in particular to a transformer load for driving a magnetron.

### BACKGROUND

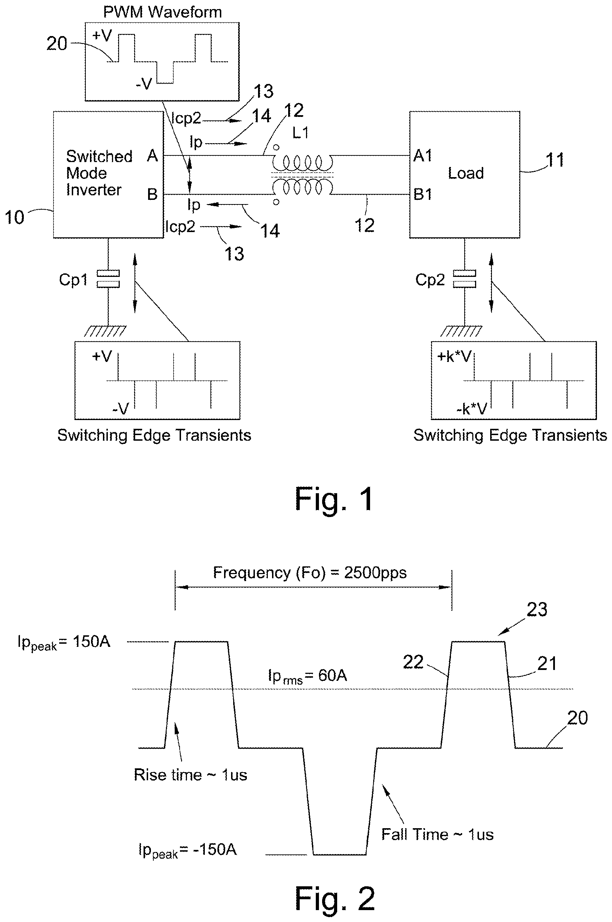

As shown in Figure 1, a switched mode inverter (SMI) 10 for connection to a load 11 by an interconnection 12 is known, in which first and second connectors A, B of the switched mode inverter 10 are connected by the interconnection 12 to first and second connectors A1, B1 respectively of the load 11.

Most usually, switched mode inverters use pulse width modulation (PWM) with a waveform 20 substantially as shown in Figure 2. Such PWM waveforms 20 permit very flexible control methods of the load to be employed but the rectangular nature of the pulses means that a fast rate of change of voltage (dV/dt) on the leading edges 22 and trailing edges 21 of the switching pulses 23 can result in high currents flowing into stray capacitances Cp1 associated with the switched mode inverter, since I=C*dV/dt where I is the current flowing into a capacitance, C is the stray capacitance and dV/dt is the rate of change of voltage V at the pulse edges. Similar current can flow into a stray capacitance Cp2 of the load. In this case the current I_{cp2} flows through both conductive elements of the cable connection 12 from the switched mode inverter 10 to the load 11. To prevent, or at least minimize, the current I_{cp2} in the stray capacitance Cp2 of the load, flowing in the same direction in both parts of an interconnection 12, shown by arrow-headed lines 13, a common mode choke LI, which tends to prevent current flowing in the same direction in both conductive paths of the interconnection, is provided in the interconnection. The choke or inductor L1 thus provides a high impedance to impede current I_{cp2} that would otherwise flow in the same direction, shown by arrow headed lines 13, in both parts of the interconnection joining the first connector A of the SMI to the first connector A1 of the load and the second connector B of the SMI to the second connector B1 of the load, while offering minimal impedance to the desired load current Iₚ flowing in opposed directions of arrow-headed lines 14 to the load via the first connector A of the SMI and first connector A1 of the load and from the load via second connector B1 of the load and the second connector B of the SMI. The desired current flows to the load on one cable, and back on another. The core has no effect on this differential signal, because the magnetic flux induced in the core by the outward current is cancelled by that in the return. In the case of stray capacitance, currents are flowing in the same direction on both conductors, the magnetic fluxes add, so that the core acts as a common mode choke.

The choke LI, by minimizing the current flow I_{cp2} in direction of arrow-headed line 13, minimizes the voltage that appears across Cp2, reducing the voltage across the stray capacitance from Vₚₑₐₖ to k*Vₚₑₐₖ, where, with an appropriate design, the factor k is much less than 1. In prior art arrangements, the common mode choke provided a high impedance to noise, either generated at the SMI or at the load (such as would be generated by a magnetron), but the effect of the impedance was to reflect the noise, so there could have been radiation from the conductors causing EMC problems.

Voltages that appear across the stray capacitances Cp1 and Cp2 stress associated dielectric materials and can lead to premature aging and consequent failure of such dielectric systems, and are therefore preferably avoided or minimised.

Generally, good design practice minimizes or shields the capacitances Cp1 and Cp2 and a choke L1 is installed in the feed lines connecting the first connector A of the SMI to the first connector A1 of the load and connecting the second connector B of the SMI to the second connector B1 of the load, and these lines are, in low power SMI's (i.e. <1000 watts), quite short and direct.

However, in high-power systems, EMC issues arise. In such high-power systems, the SMI and load can be physically quite large items, possibly with volumes of many hundreds of litres, and the resultant values of stray capacitances Cp1 and Cp2 can be very large, 5 to 30nF being quite typical. With rates of changes of voltage typically of the order of 1000V/µs, the resultant common mode current I_{cp2} flowing in direction of arrow-headed lines 13 could be typically 30A peak. Furthermore, it is not uncommon for the parts of the interconnection connecting the first connector A of the SMI to the first connector A1 of the load 11 and connecting the second connector B of the SMI to the second connector B1 of the load to be, perhaps, 5 metres long. Such large pulsed currents in such a long wire represent a source of a very serious EMC problem.

In known circuits with a motor load, switching the voltage at a high frequency results in a current with a low frequency sine wave oscillation in the range 20 to 100 Hz. With a transformer as a load the current is also of a high frequency form and this requires a different approach to the lead system in the case of a transformer load from that used with a motor load.

Thus, a further problem in high power systems with a transformer load is that the desired current Iₚ flowing in the direction 14 in the parts of the interconnection connecting the first connector A of the SMI to the first connector A1 of the load and the second connector B1 of the load to the second connector B of the SMI will be of a high frequency nature and also have high rms values. As indicated above, a typical waveform 20 is shown in Figure 2, having a pulse frequency of 2,500 pulses/sec, peak currents of ±150 A, an rms current of 60 A and pulse rise and fall times of the order of 1 µs.

With high frequency currents, due to eddy current effects, the current flows close to the surface and only the conductive material of thin conductors will be fully utilised. That is, the resultant AC resistance R_{ac} at high frequencies will be the same as the DC resistance R_{dc} if a thin conductor is used. So with high frequency currents that are of a high rms value, Ipᵣₘₛ, multiple conductors isolated from each other are required to handle the current without excessive dissipation. As a guide to what is a "high frequency" pulsed current and what is a "thin" conductor, at a pulse rate of 2,500 Hz the skin depth at which the current flow falls to 37% of its value is approximately 1.3 mm in a pure copper conductor. The current penetration of the higher frequency components of the current waveform in Figure 2 would be even less than 1.3 mm

At high frequencies the inductance of the cable can present a limiting impedance and result in the pulse current flow being restricted or distorted. This could, in principle, be overcome by using a connector such as coaxial cable or other specialised cable that can minimise inductance per unit length. However, such cable tends to be expensive and the copper in the inner conductor usually has a much smaller cross-sectional area than the outer conductor. Coaxial cable is designed for matched impedance transmission at frequencies of the order of 1 MHz and above. Therefore, when, as in the present case, the frequency is only a few kHz, coaxial cable is not an ideal choice for high power/current transmission.

Moreover, to maximise the transmission of power in high power systems, multiphase power transmission systems are used. The most common of these is a 3-phase connection. The strategies discussed above can also be applied to a 3-phase SMI feeding a 3-phase load.

The problems described above are well known and numerous solutions to individual aspects of the problems have been proposed in the existing art.

It is an object of the present invention at least to ameliorate the aforesaid shortcomings in the prior art.

US 2006/0021787 discloses a high voltage, insulated electrical power cable suitable for use adjacent to one or more low power signal communications conductors in metal or plastic conduit or raceway.

US 2004/173368 discloses an EMI reduction system comprising a conductor and a lossy coating encasing the conductor and comprising one or more lossy layers.

US 2008/143285 discloses an RFI/EMI filter for a variable frequency motor drive system includes a variable frequency drive; a common mode choke; a motor; a cable including a plurality of power leads interconnecting the motor with the variable frequency drive and passing through the choke; a ground shield surrounding the cable and connected to motor ground and variable frequency drive ground; and a common mode return conductor interconnected between the variable frequency drive and the motor and disposed within the shield and passing through the choke for returning a portion of the common mode current to cancel a portion of the saturation current experienced by the choke to increase the portion of the common mode current carried by the return conductor and decrease the portion carried by the shield to reduce the RFI/EMI contributed by the shield.

It is an object of the present invention at least to ameliorate the aforesaid shortcomings in the prior art.

### BRIEF SUMMARY OF THE DISCLOSURE

According to a first aspect of the invention there is provided an interconnection for connecting a switched mode invertor to a transformer load as set out in claim 1. The dependent claims recite further features of embodiments of the invention. According to a disclosed example there is provided an interconnection for connecting a switched mode inverter to a transformer load, the interconnection comprising: a plurality of insulated conductors; sleeving means sleeving the insulated conductors together; and at least one lossy toroidal inductor core concentric with and partially surrounding the sleeving means to hold the plurality of insulated conductors together; wherein the at least one lossy toroidal inductor

Advantageously, high frequency eddy current effects are minimised by a suitable choice of diameters of conductive cores of the plurality of insulated conductors and of the spacing between the centres of the conductive cores.

Conveniently, the interconnection further comprises a central insulating member wherein the plurality of insulated conductors are arranged around the central insulating member.

Advantageously, the plurality of insulated conductors are arranged substantially in a circle around the central insulating member with a first plurality of insulated conductors arranged in a first semicircle for passing electrical current in a first direction through the interconnection and a second plurality of insulated conductors arranged in a second semicircle opposed to the first semicircle for passing electrical current in a second direction opposed to the first direction through the interconnection.

Alternatively, the plurality of insulated conductors are arranged in a circle with members of a first plurality of insulated conductors alternating with members of a second plurality of insulated conductors and the first plurality of insulated conductors is arranged for passing current in a first direction through the interconnection and the second plurality of insulated conductors is arranged for passing a current in a second direction, opposed to the first direction, through the core is arranged to act as a common mode inductor to minimise current flowing through the interconnection to a stray capacitance of the load and the insulated conductors are arranged to minimize eddy current loss.

Advantageously, high frequency eddy current effects are minimised by a suitable choice of diameters of conductive cores of the plurality of insulated conductors and of the spacing between the centres of the conductive cores.

Conveniently, the interconnection further comprises a central insulating member wherein the plurality of insulated conductors are arranged around the central insulating member.

Advantageously, the plurality of insulated conductors are arranged substantially in a circle around the central insulating member with a first plurality of insulated conductors arranged in a first semicircle for passing electrical current in a first direction through the interconnection and a second plurality of insulated conductors arranged in a second semicircle opposed to the first semicircle for passing electrical current in a second direction opposed to the first direction through the interconnection.

Alternatively, the plurality of insulated conductors are arranged in a circle with members of a first plurality of insulated conductors alternating with members of a second plurality of insulated conductors and the first plurality of insulated conductors is arranged for passing current in a first direction through the interconnection and the second plurality of insulated conductors is arranged for passing a current in a second direction, opposed to the first direction, through the interconnection.

Conveniently, the plurality of insulated conductors comprises a plurality of PVC-insulated copper-core cables.

Advantageously, the interconnection comprises a plurality of lossy toroidal inductor cores spaced along the interconnection and arranged to hold the plurality of insulated conductors together and to act as a common mode inductor to minimise current flowing to a stray capacitance of the load.

Conveniently, the at least one lossy toroidal inductor core has a quality factor less than 2 at a frequency of 100 kHz.

Advantageously, the interconnection is arranged for pulse wave modulation of the load.

Conveniently, the interconnection is arranged to pass a multiphase current between the switched mode inverter and the load.

Advantageously, the plurality of insulated conductors comprises a go and return pair grouped together in a phase group for each of the phases with at least one lossy toroidal inductor core arranged as a common mode inductor on each phase group.

Conveniently, the interconnection is arranged to pass a three-phase pulsed current.

### BRIEF DESCRIPTION OF THE DRAWINGS

Embodiments of the invention are further described hereinafter, by way of example, with reference to the accompanying drawings, in which:
Figure 1 is a block diagram of an interconnection, for which the present invention may be used, for connecting a switched mode inverter to a load;
Figure 2 is a waveform typically used for pulse wave modulation in the interconnection of Figure 1;
Figure 3 is a transverse cross-section drawing of an interconnection according to the present invention;
Figure 4 is a perspective view of a transverse cross-section of an interconnection according to the present invention;
Figure 5 is a illustration of toroidal cores suitable for use in the interconnections of Figures 3 or 4.
Figure 6 is a diagram showing magnetic cores spaced along the interconnection of Figures 3 or 4; and
Figure 7 is a schematic diagram of a three-phase interconnection embodiment of the present invention.

In the Figures like reference numerals denote like parts.

### DETAILED DESCRIPTION

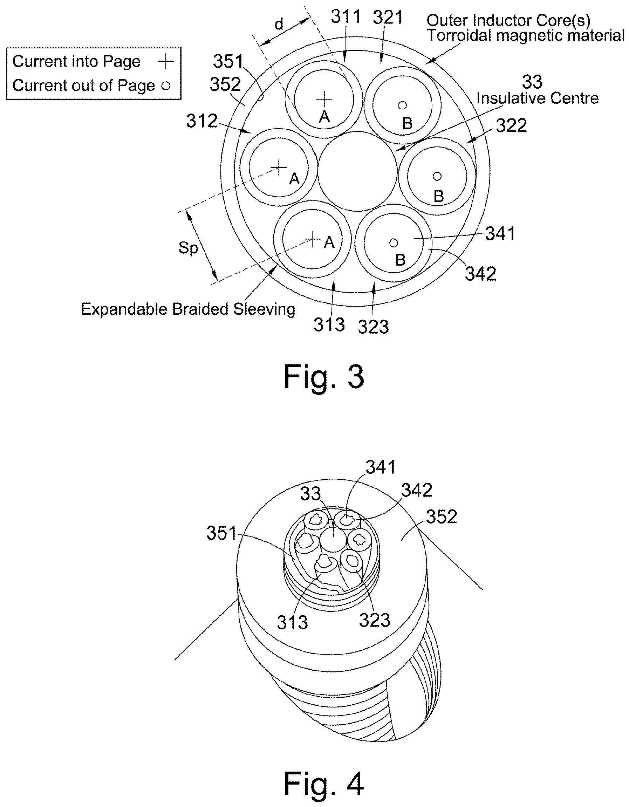

Figure 3 shows a cross-section of a cable interconnection according to an embodiment of the invention that would be suitable for connecting a first connector A of an SMI 10 to a first connector A1 of a load 11 and connecting a second connector B of the SMI 10 to a second connector B1 of the load 11 in Figure 1.

In Figure 3, electrical conductor cross-sections 311-313 marked A, with current flowing into the page, are "go" conductors connecting the first connector A of the SMI to the first connector A1 of the load and the electrical conductor cross-sections 321-323 marked B, with current flowing out of the page, are "return" conductors connecting the second connector B1 of the load to the second connector B of the SMI.

Minimisation of high frequency eddy current effects, which undesirably make the ratio of the AC resistance R_{AC} to the DC resistance R_{DC} much greater than 1, is dependent on two key parameters: a diameter d of the individual conductors 341 and a spacing Sp between centres of the individual conductors 341. The calculations required for such minimisation are available in numerous standard texts but only for a relatively simple example, such as, for example, in "Alternating current resistance", Bell System Technical Journal, Volume 4, April 1925, page 327. The far more complex arrangements of conductors required in this invention can be solved using computer aided design. It is important to retain the mechanical arrangement of the conductors to minimise loss in much the same way as coaxial cable needs to be kept coaxial to perform its function correctly.

As can be seen in Figures 3 and 4, the cables 311-313, 321-323 that comprise the conductors are arranged transversely in two opposed semicircular halves respectively of a circle around an insulating central member 33. Arranging the conductors substantially in a circle causes the high frequency current to flow at the outer surface of the cores of the interconnection. A conducting central member would do little to increase the current flow so that using, for example, copper for the central member instead of a less expensive insulating member would increase the cost of the interconnection without improving electrical conductivity.

Individual cables such as Tri-rated BS6231 single core PVC insulated flexible cables with a single core copper conductor 341 insulated by a PVC insulating outer layer 342 are suitable for uses as the cables 311-313 and 321-323. To keep the interconnection loosely in its required pattern, the group of cables 311-313, 321-323 and insulating centre member 33 are sheathed in expandable braided insulated sleeving 351, such as RS 408-205. As shown in Figures 3, 4 and 6, to keep the cables in their grouping, torroidal cores 352 of a suitable magnetic material, to form the inductance L1 of Figure 1, also act as clamps to keep or hold the cables grouped together to form the interconnection. Although it is convenient for the toroidal cores to be used to hold the insulated conductors together as well as acting as common mode inductors, embodiments of the invention are envisaged in which the toroidal cores act solely as a common mode inductor and other clamping or holding means are used to clamp or hold the insulated conductors of the interconnection together.

Any magnetic material normally currently used in inductor design is suitable for use in the toroidal cores. Appropriate laminar iron dust cores, or ferrites can be used. An important feature is that the magnetic material particle size is much greater or the laminations of the core are much thicker than would be used in a normal or typical inductor. This is to increase eddy current loss and thus increase resistance. For a 100 kHz inductor, a particle size or lamination thickness in a typical inductor is approximately 25 µm. Using a particle size or lamination thickness of 300 µm or even more in the present invention, eddy current loss becomes sufficiently high to produce a lossy inductor at 100 kHz.

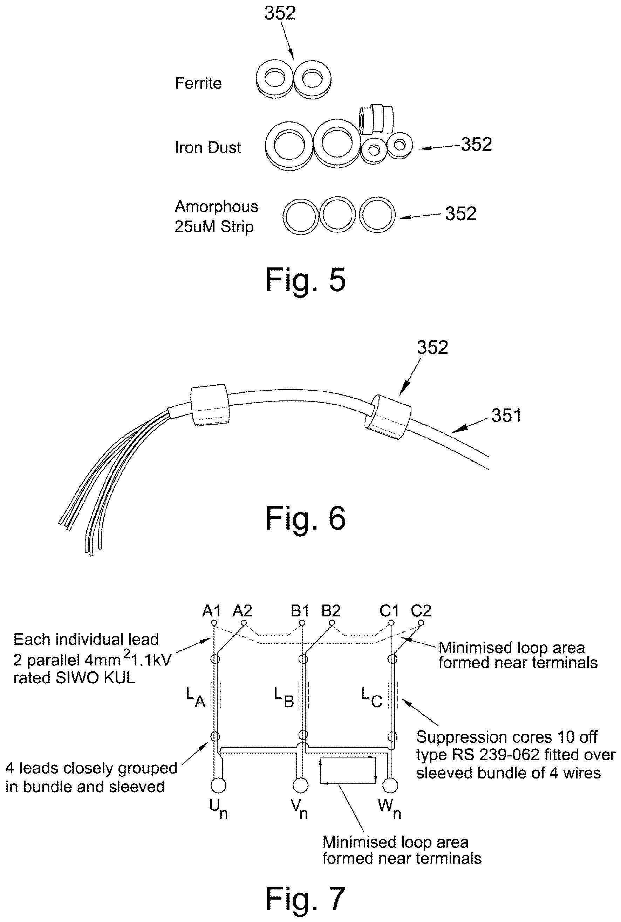

A quality factor Q, which is a ratio of the reactive component to the resistive component of the common mode choke, is intentionally very low, so causing resistive dissipation of the common mode switching edge transitions rather than reflection. A value of Q below 2 is ideal, compared with a typical inductor which would have a value of the quality factor greater than 50. As shown in Figure 6, the magnetic cores are spaced at intervals along the interconnection suitable for the magnetic cores to act both as inductors and cable clamps. A wide variety of suitable cores from Micrometals Inc., 5615 E. La Palma Avenue, Anaheim, CA 92807 USA or Fair-Rite Products Corp. PO Box 288, 1 Commercial Row, Wallkill, NY 12589 can be employed for the toroidal inductor cores. A photograph of a typical interconnect arrangement, including two toroidal cores, is shown in Figure 4.

In the invention, the lossy choke dissipates as heat the noise generated at the SMI or at the load, thereby reducing or eliminating the EMC problem of the prior art.

The cable grouping shown in Figures 3 and 4 is only one example of possible groupings of the insulated conductors. Other groupings which can be usefully used include a grouping with alternate cables located around a circle being used as "go" and "return" conductors. Also a random assembly, with or without the central insulating core of the conductors, will under many circumstances prove adequate. The total number of cables to be used in the interconnection is determined by a predetermined required current rating. It is found that, by correct calculation and appropriate design, the total amount of copper used in an interconnection of the invention is no greater than that required for an equivalent direct current interconnection. However, the overall diameter of the interconnection of the invention may be larger than required for an equivalent DC interconnection, because of the required insulation and spacing between individual conductors.

For a three-phase application, a suitable arrangement of cables is shown in Figure 7. This arrangement uses a pair of cables per lead and each go and return pair for each of the phases is grouped together and the common mode inductors L_{A} , L_{B} and L_{C} are arranged on each phase grouping of leads. The inductance formed by the loops between the three-phase SMI having phased sources Uₙ, Vₙ and Wₙ and the load having terminals A1, A2, B1, B2, C1 and C2 should be minimised as shown in Figure 7. It will be understood that the lines connecting A1 and C2; A2 and B1 and B2 and C1 do not represent leads but imply interconnects. The arrangement shown is typical for a 2,500 Hz PWM waveform with 50A rms rating per phase from a source voltage of 690V rms. This has each individual lead formed of a pair of parallel 4 mm² 1.1 kV rated SIWO-KUL™ cables with four cables closely grouped in a bundle and sleeved together. Ten suppression cores of type RS 239-062 are fitted over the sleeved bundle of four cables to clamp the cables together and provide the common mode inductor or choke. It will be seen that separate inductors L_{A}, L_{B}, L_{C} are used for each group of cables with the same phase.

Thus this invention when applied to poly-phase systems uses a simple method that overcomes at least some of the problems in the prior art, uses standard electrical single core wires in a suitable arrangement, instead of specialised and more expensive coaxial cable, and provides the required inductance L1 using multiple magnetic toroidal cores that double as cable clamps to keep the cables in a required arrangement.

Throughout the description and claims of this specification, the words "comprise" and "contain" and variations of them mean "including but not necessarily limited to", and they are not intended to (and do not) exclude other moieties, additives, components, integers or steps. Throughout the description and claims of this specification, the singular encompasses the plural unless the context otherwise requires. In particular, where the indefinite article is used, the specification is to be understood as contemplating plurality as well as singularity, unless the context requires otherwise.

Features, integers, characteristics, compounds, chemical moieties or groups described in conjunction with a particular aspect, embodiment or example of the invention are to be understood to be applicable to any other aspect, embodiment or example described herein unless incompatible therewith. All of the features disclosed in this specification (including any accompanying claims, abstract and drawings), and/or all of the steps of any method or process so disclosed, may be combined in any combination, except combinations where at least some of such features and/or steps are mutually exclusive. The invention is not restricted to the details of any foregoing embodiments. Variations and modifications of the disclosed embodiments are possible without departing from the scope of the appended claims..

## Claims

1. An interconnection (12) for connecting a switched mode inverter (10) to a transformer load (11), the interconnection comprising:
a) a plurality of insulated conductors (311-313; 321-323);
b) sleeving means (351) sleeving the insulated conductors together; and
c) at least one lossy toroidal inductor core (352) concentric with and partially surrounding the sleeving means to hold the plurality of insulated conductors together;
wherein the at least one lossy toroidal inductor core is arranged to act as a common mode inductor to minimise current flowing through the interconnection to a stray capacitance (Cp2) of the load and diameters (d) of conductive cores (341) of the plurality of insulated conductors (311-313; 321-323) and the spacing (Sp) between the centres of the conductive cores (341) are arranged to minimize eddy current loss.

2. An interconnection as claimed in claim 1, further comprising a central insulating member (33) wherein the plurality of insulated conductors (311-313; 321-323) are arranged around the central insulating member (33).

3. An interconnection as claimed in claim 2, wherein the plurality of insulated conductors (311-313; 321-323) are arranged substantially in a circle around the central insulating member (33) with a first plurality of insulated conductors (311-313) arranged in a first semicircle for passing electrical current in a first direction through the interconnection and a second plurality of insulated conductors (321-323)arranged in a second semicircle opposed to the first semicircle for passing electrical current in a second direction opposed to the first direction through the interconnection.

4. An interconnection as claimed in claim 2, wherein the plurality of insulated conductors are arranged in a circle with members of a first plurality of insulated conductors alternating with members of a second plurality of insulated conductors and the first plurality of insulated conductors is arranged for passing current in a first direction through the interconnection and the second plurality of insulated conductors is arranged for passing a current in a second direction, opposed to the first direction, through the interconnection.

5. An interconnection as claimed in any of the preceding claims, wherein the plurality of insulated conductors (311-313; 321-323) comprises a plurality of PVC-insulated copper-core cables.

6. An interconnection as claimed in any of the preceding claims, comprising a plurality of lossy toroidal inductor cores (352) spaced along the interconnection and arranged to hold the plurality of insulated conductors (311-313; 321-323) together and to act as a common mode inductor to minimise current flowing to a stray capacitance (Cp2) of the load.

7. An interconnection as claimed in any of the preceding claims wherein the at least one lossy toroidal inductor core (352) has a quality factor less than 2 at a frequency of 100 kHz.

8. An interconnection as claimed in any of the preceding claims, arranged for pulse wave modulation of the load.

9. An interconnection as claimed in any of the preceding claims, arranged to pass a multiphase current between the switched mode inverter (10) and the load (11).

10. An interconnection as claimed in claim 9, wherein the plurality of insulated conductors (311-313; 321-323) comprises a go and return pair grouped together in a phase group for each of the phases with at least one lossy toroidal inductor core (352) arranged as a common mode inductor on each phase group.

11. An interconnection as claimed in claims 9 or 10 arranged to pass a three-phase pulsed current.

## Patentansprüche

1. Verbindung (12) zur Verbindung eines Schaltumrichters (10) mit einer Transformatorlast (11), wobei die Verbindung folgendes umfasst:
a) eine Mehrzahl isolierter Leiter (311-313; 321-323);
b) Manschettenmittel (351) zur Ummantelung der isolierten Leiter; und
c) mindestens einen verlustbehafteten Ringinduktorkern (352), der mit dem Manschettenmittel konzentrisch ist und dieses teilweise umgibt, um die Mehrzahl isolierter Leiter zusammen zu halten;
wobei der mindestens eine verlustbehaftete Ringinduktorkern so angeordnet ist, dass er als Gleichtaktinduktor fungiert, um den durch die Verbindung zu einer Streukapazität (Cp2) der Last fließenden Strom zu minimieren, und wobei die Durchmesser (d) der leitfähigen Kerne (341) der Mehrzahl isolierter Leiter (311-313; 321-323) und der Abstand (Sp) zwischen den Mitten der leitfähigen Kerne (341) so angeordnet sind, dass der Wirbelstromverlust minimiert wird.

2. Verbindung nach Anspruch 1, wobei diese ferner ein zentrales isolierendes Element (33) umfasst, wobei die Mehrzahl isolierter Leiter (311-313; 321-323) um das zentrale isolierte Element (33) angeordnet ist.

3. Verbindung nach Anspruch 2, wobei die Mehrzahl isolierter Leiter (311-313; 321-323) im Wesentlichen in einem Kreis um das zentrale isolierende Element (33) angeordnet ist, wobei eine erste Mehrzahl isolierter Leiter (311-313) in einem ersten Halbkreis angeordnet ist, um elektrischen Strom in eine erste Richtung durch die Verbindung zu führen, und wobei eine zweite Mehrzahl isolierter Leiter (321-323) in einem zweiten Halbkreis angeordnet ist, der dem ersten Halbkreis gegenüber liegt, um elektrischen Strom in eine zweite Richtung durch die Verbindung zu führen, die zu der ersten Richtung entgegengesetzt ist.

4. Verbindung nach Anspruch 2, wobei die Mehrzahl isolierter Leiter in einem Kreis angeordnet ist, wobei sich die Elemente einer erste Mehrzahl isolierter Leiter mit den Elementen einer zweiten Mehrzahl isolierter Leiter abwechseln, und wobei die erste Mehrzahl isolierter Leiter so angeordnet ist, dass sie Strom in eine erste Richtung durch die Verbindung führt, und wobei die zweite Mehrzahl isolierter Leiter so angeordnet ist, dass sie einen Strom in eine zweite Richtung, die zu der ersten Richtung entgegengesetzt ist, durch die Verbindung führt.

5. Verbindung nach einem der vorstehenden Ansprüche, wobei die Mehrzahl isolierter Leiter (311-313; 321-323) eine Mehrzahl von mit PVC isolierten Kupferaderkabeln umfasst.

6. Verbindung nach einem der vorstehenden Ansprüche, wobei diese eine Mehrzahl verlustbehafteter Ringinduktorkerne (352) umfasst, die mit Zwischenabständen entlang der Verbindung angeordnet sind und die so angeordnet sind, dass sie die Mehrzahl isolierter Leiter (311-313; 321-323) zusammenhalten und als ein Gleichtaktinduktor fungieren, um den durch die Verbindung zu einer Streukapazität (Cp2) der Last fließenden Strom zu minimieren.

7. Verbindung nach einem der vorstehenden Ansprüche, wobei der mindestens eine verlustbehaftete Ringinduktorkern (352) bei einer Frequenz von 100 kHz einen Gütefaktor von unter 2 aufweist.

8. Verbindung nach einem der vorstehenden Ansprüche, wobei diese für eine Pulswellenmodulation der Last angeordnet ist.

9. Verbindung nach einem der vorstehenden Ansprüche, wobei diese so angeordnet ist, dass sie einen mehrphasigen Strom zwischen dem Schaltumrichter (10) und der Last (11) durchführt.

10. Verbindung nach Anspruch 9, wobei die Mehrzahl isolierter Leiter (311-313; 321-323) ein Zweiwegepaar umfasst, das in einer Phasengruppe für jede der Phasen gruppiert ist, wobei mindestens ein verlustbehafteter Ringinduktorkern (352) als ein Gleichtaktinduktor an jeder Phasengruppe angeordnet ist.

11. Verbindung nach Anspruch 9 oder 10, wobei diese so angeordnet ist, dass sie einen dreiphasigen Impulsstrom durchführt.

## Revendications

1. Interconnexion (12) permettant de raccorder un inverseur à découpage (10) à une charge de transformateur (11), l'interconnexion comprenant :
a) une pluralité de conducteurs isolés (311-313 ; 321-323) ;
b) un moyen de gainage (351) gainant ensemble les conducteurs isolés ; et
c) au moins un noyau inducteur toroïdal à perte (352) concentrique avec et entourant partiellement le moyen de gainage pour maintenir ensemble la pluralité de conducteurs isolés ;
l'au moins un noyau inducteur toroïdal à perte étant conçu pour agir en tant qu'inducteur de mode commun pour réduire au minimum le courant circulant à travers l'interconnexion à une capacité parasite (Cp2) de la charge et les diamètres (d) des noyaux conducteurs (341) de la pluralité de conducteurs isolés (311-313 ; 321-323) et l'espacement (Sp) entre les centres des noyaux conducteurs (341) étant prévus pour réduire au minimum la perte par courants de Foucault.

2. Interconnexion selon la revendication 1, comprenant en outre un élément isolant central (33), la pluralité de conducteurs isolés (311-313 ; 321-323) étant disposés autour de l'élément isolant central (33).

3. Interconnexion selon la revendication 2, la pluralité de conducteurs isolés (311-313 ; 321-323) étant disposés sensiblement en cercle autour de l'élément isolant central (33) avec une première pluralité de conducteurs isolés (311-313) disposés dans un premier demi-cercle pour faire passer le courant électrique dans une première direction à travers l'interconnexion et une seconde pluralité de conducteurs isolés (321-323) disposés dans un second demi-cercle opposé au premier demi-cercle pour faire passer le courant électrique dans une seconde direction opposée à la première direction à travers l'interconnexion.

4. Interconnexion selon la revendication 2, la pluralité de conducteurs isolés étant disposés en cercle avec des éléments d'une première pluralité de conducteurs isolés alternant avec des éléments d'une seconde pluralité de conducteurs isolés et la première pluralité de conducteurs isolés étant disposés pour faire passer un courant dans une première direction à travers l'interconnexion et la seconde pluralité de conducteurs isolés étant disposés pour faire passer un courant dans une seconde direction, opposée à la première direction, à travers l'interconnexion.

5. Interconnexion selon l'une quelconque des revendications précédentes, la pluralité de conducteurs isolés (311-313 ; 321-323) comprenant une pluralité de câbles à âme en cuivre isolés en PVC.

6. Interconnexion selon l'une quelconque des revendications précédentes, comprenant une pluralité de noyaux inducteurs toroïdaux à perte (352) espacés le long de l'interconnexion et conçus pour maintenir ensemble la pluralité de conducteurs isolés (311-313 ; 321-323) et pour agir en tant qu'inducteur de mode commun pour réduire au minimum le courant circulant vers une capacité parasite (Cp2) de la charge.

7. Interconnexion selon l'une quelconque des revendications précédentes, l'au moins un noyau inducteur toroïdal à perte (352) ayant un facteur de qualité inférieur à 2 à une fréquence de 100 kHz.

8. Interconnexion selon l'une quelconque des revendications précédentes, conçu pour la modulation par ondes pulsées de la charge.

9. Interconnexion selon l'une quelconque des revendications précédentes, conçue pour faire passer un courant multiphasé entre l'inverseur à découpage (10) et la charge (11).

10. Interconnexion selon la revendication 9, la pluralité de conducteurs isolés (311-313 ; 321-323) comprenant une paire aller et retour groupée ensemble dans un groupe de phases pour chacune des phases avec au moins un noyau inducteur toroïdal à perte (352) conçu comme inducteur de mode commun sur chaque groupe de phases.

11. Interconnexion selon la revendication 9 ou 10, conçue pour faire passer un courant triphasé pulsé.
